# EUROPEAN PATENT APPLICATION

(11) **EP 1 108 888 A2**
(43) Date of publication of application: **20.06.2001**
(21) Application number: 00250426.4
(22) Date of filing: 12.12.2000
(51) Int. Cl.: F03D 1/02, F03D 1/04

(54) **Energy converter**

(30) Priority: 15.12.1999 AR 9906439
(71) Applicant: Bolcich, Alejandro Juan Alfredo, San Carlos de Bariloche, Province of Rio Negro (AR); Bolcich, Diego Ignacio, San Carlos de Bariloche, Province of Rio Negro (AR)
(72) Inventor: Bolcich, Alejandro Juan Alfredo, San Carlos de Bariloche, Province of Rio Negro (AR); Bolcich, Diego Ignacio, San Carlos de Bariloche, Province of Rio Negro (AR)
(74) Representative: Hengelhaupt, Jürgen D., Dipl.-Ing.

(57) **Abstract**

The invention provides a wind energy converter comprising a wind actuated rotor assembly rotatably mounted around a horizontal axis on the top of a support tower, the rotor assembly comprising two axially aligned and spaced apart rotors, each rotor comprising a plurality of blades, wherein the blades of one of the rotors have a pitch opposite to the pitch of the blades of the other rotor whereby the rotors rotate in opposite directions.

## Description

### BACKGROUND OF THE INVENTION

### 1. Field of the Invention.

The present invention relates to a wind turbine system with horizontal axis, and more particularly to wind turbines either for generating electric power useful for several applications, or energy for moving a water pump, energy for feeding devices for obtaining hydrogen free from electrolysis, etc. The new and special characteristics of the invention, as well as the theoretical fundaments on which the development and operation of the invention is based on will be clearly apparent from the following specification, the figures showing its structure and the charts showing the characteristic curves of the variables involved.

### 2. Description of the Prior Art.

It is well known to provide wind turbines and wind fans for converting the wind force and velocity into energy, which, from the point of view of their operation, may be classified as thrust devices or lift or "wing effect" devices, and within the same, these devices may be of vertical or horizontal axis, the latter being the most largely employed in the art.

The thrust devices are most employed in pumping water, and have a high number of blades or vanes with a yield of 10% of the available wind energy, the obtained power being only a few kW.

On the other side, the "wing effect" converters always employ a rotor and have an efficiency almost reaching the 40% for a narrow range of wind velocity values. These devices may also be subdivided into two groups according to the size of the equipment, namely large turbines with a power between 75 kW and 1500 kW; small turbines giving a power between 0.2 kW and 20 kW. It is to be remarked that nowadays the turbine between 20-75 kW are little employed.

The main elements that are common in these devices are a tower or post; a rotor with two or three blades or vanes either with fixed or variable pitch; a mechanical system for interconnecting the rotor to the generator of the system having, in some cases, angular speed-multiplying boxes with gears, belts and chains; active or passive orientation system for orientating the rotors to the wind direction; brakes and electric generator.

The larger turbines are being used preferably for generating electricity interconnected to the distribution net systems. The fixed and variable pitch rotors are used depending on the wind speed and thus the collecting of the wind energy is thus improved, as well as its conversion into mechanical energy through the blades and associated components which, connected to the generator, transform the wind energy into electric energy.

Some of the most modern machines have incorporated the concept of variable frequency rotor, in this way achieving a substantial improvement in the output of the transformation of wind energy into electric power. The electric generators of these machines usually use permanent magnets thus simplifying their construction and increasing their efficiency, particularly in lower power ranges. The interconnection between the generators and the electric net systems is obtained by means of frequency converters and rectifiers, that is electric power conditioning.

In addition to the foregoing, the small machines have recently started to use generators with high magnetic energy permanent magnets, (B.H.) max., and high coercive force (Hc), directly associated with the blades carrying rotor. The application of these small turbines is mainly directed to serve to the namely isolated, remote and far away locations, such as rural settlements and towns, with low population densities. Normally, these turbines include a set of electric batteries preferably used for supplying electricity for domestic use in illumination, in small industrial machinery and also in water pumping.

On the other side, it is to be remarked the increasing world desire of obtaining free hydrogen from the water, biomass and/or hydrocarbon decomposition, which is defined as "vectorization" of the energy, wherein the energy is obtained from the wind. Thus, if electricity is available, and it is available at the lowest possible cost, free hydrogen can be obtained, which hydrogen may be accumulated, transported and applied as fuel. This fuel is useful either for vehicles, for domestic, residence or industrial uses, and also for generating electricity by means of combustion engines or engines using electrochemical conversion in fuel cells. This is to say that, from free hydrogen, a true sustained, clean and inexhaustible energy can be obtained.

Based on the above it can be affirmed that the hydrogen production will increase the use of wind energy, either in isolated and far locations as well as in the large centers of transformation and consume, thus substantially contributing to the preservation and recuperation of the environment.

Undoubtedly, the generation and distribution of electric energy by means of wind turbines, particularly with the required power for satisfying the needs of the regions where they are installed, is closely related to the number of inhabitants or the population density in such regions. For this reason some brief considerations will be made in connection to this aspect.

Citing some illustrative examples, the isolated population without electric service in Argentina is only the 5-6% of the population, in Brazil this value is about 20%, which comprises about 30 million people. In Latin America, the dispersed population is about 27% and the dispersed isolated population in the world is about 33%. This means that about 2,000 millions of inhabitants in the world have no electric energy, this being a relevant figure that evidences the imperative need for efficiently solving this problem with the purpose of improving the living quality of populations living in such conditions.

In the Patagonian region, for instance, the benefits of having electric energy for common use is undebatable, but the availability of water and heat, either for human use as well as for agriculture and live stock, is much more important.

In many regions good quality wind is available, this good quality being understood as a wind with a high average speed and persistence, thus a turbine, a fan or a wind converter may transform the wind energy into electricity, heat, potable water and free hydrogen.

One of the main problems to be solved in the known wind turbines, in any of their applications, is the low output or yielding in the conversion of wind energy into electric energy. As regards this, it may be remarked that according to the present state of the art, the eventual solutions tending to increase the wind/electric energy conversion is to install several conventional turbine units, that is only one rotor turbines, and this installation involve a high considerable cost.

It would be therefore convenient to have a new wind energy converter capable of remarkably increasing the wind/electric energy conversion output without proportionally increasing the manufacturing and installation costs.

### 3. Summary of the Invention.

It is therefore an object of the present invention to provide an energy converter of the type comprising a support structure and a wind actuated rotor assembly mounted on the structure, the rotor assembly comprising at least two axially aligned and spaced apart rotors rotating in opposite directions.

It is still another object of the present invention to provide a wind energy converter comprising a wind actuated rotor assembly rotatably mounted around a horizontal axis on the top of a support tower, the rotor assembly comprising two axially aligned and spaced apart rotors, each rotor comprising a plurality of blades, wherein the blades of one of the rotors have a pitch opposite to the pitch of the blades of the other rotor whereby the rotors rotate in opposite directions.

Differing from the prior art, the turbine according to the present invention provides a remarkable and efficient solution to the problems in the conversion of wind energy into electric energy because, due to the high efficiency in transforming the wind energy, the present turbine system may be applied to several uses such as water pumping, heat and/or conditioned air generation, electric energy production, hydrogen production for fuel use, that is the named "vectorization" of energy, in this case from wind. Furthermore, due to the structural features and the benefits achieved from the same, the present turbine system is also satisfactorily applicable in nautical uses for supplying electricity to auxiliary equipment in boats and ships, for supplying electricity for boat motors, for replacing and/or complementing the traditional sails, and particularly for sailing in a direction opposite to the wind direction.

It may be mentioned, among the most remarkable advantages of the present invention, as it will be apparent along the present specification, that the turbines may operate with low wind velocities, thus permitting the conversion of wind energy in regions with low wind regimes or where only soft winds are available, the turbines being also capable of operating in low regions. In addition, due to the way the channeling of the wind is made towards the rotors, a wind acceleration is achieved, thus increasing its mean velocity and, hence, the optimum conversion of its kinetic energy, that is the net force resulting in each blade of the rotor, this occurring because the blades operate under the "wing effect" and not under a thrust effect, thus increasing the "lifting" component, or "suction" component of the wind and reducing the "drag" component of the wind.

Another advantage that deserves to be cited is that this turbine system is a modular system which permits a machine of only one type to form installations providing not only a few kW but also a large and very large power ranges, also facilitating the conveying and assembling of all the components of the installation, that is supporting towers, posts and masts, rotors and other components that will be further described. As compared to the known turbines, the present system does not require costly and heavy components like multiplier gear boxes which, in addition, are noisy, energy consumers and require frequent services.

Other advantages of the present invention will be apparent along the description of its structural particularities.

It is therefore one object of the present invention to provide a horizontal-axial turbine system, preferably applied in the generation of electric energy, the turbine being of the type comprising a mast or post with an upper portion having a rotor mounted therein, the rotor being defined by radial blades or vanes that are angularly equally distant from each other and capable of rotating under the wind action exerted over the blades surfaces, wherein at least a pair of parallel rotors are mounted on the post, symmetrically one at each side of a longitudinal axis of the post, each rotor being freely rotatably mounted and rotating in opposite directions, the turbine including electric energy generating means.

### BRIEF DESCRIPTION OF THE DRAWINGS

For a better clarity and comprehension of the object of the invention, this invention has been illustrated in several drawings showing the invention according to one of the most preferred embodiments, all in exemplary way, wherein:
FIG. 1 shows a partially cross-sectional perspective view of a preferred embodiment of the present invention;
FIG. 2 is a partial elevational and cross-sectional view of an upper mounting cross component of the invention, mounted on an upper end of the post, wherein the cross component receives the rotors and other components of the system illustrated in Fig. 1;
FIG. 3 shows a top plan view of the cross component of Fig. 2;
FIG. 4 shows a front and exploded view of a rotor used in the system of the invention;
FIG. 5 shows a side view of the components mounting the blades of the invention, already shown in Fig. 4, in the cross component of Fig. 2;
FIG. 5A shows a cross sectional view of the components shown in Fig. 5;
FIG. 6 shows a front view of a mounting plate for mounting and angularly adjusting the blades in the hub of Fig. 5;
FIG. 7 shows a cross sectional view of the electric energy generating means incorporated in the present system, wherein a distal end of a blade including a permanent magnet is illustrated, the blade end passing through the air gap of the magneto-electric transducer;
FIG. 8 shows a partial and perspective view of a rotor blade, including a permanent magnet, and a support ring carrying the transducers illustrated in Fig. 7;
FIG. 9 shows a chart illustrating a typical curve of the variation of the power coefficient Cp which is a characteristic of several blade types, versus the wind velocity V;
FIG. 10 shows a chart with curves illustrating the variation in the power percentages P collected by the rotors versus the wind velocity V, for 4 collecting planes; and
FIG. 11 shows a chart with curves illustrating the variation of the generated power P versus the wind velocity, for 4 collecting planes;

### DESCRIPTION OF THE PREFERRED EMBODIMENTS

Before entering in the description of the drawings illustrating the turbine assembly of the present invention, it is considered convenient to explain the theoretical fundaments related to the parameters and variables taken into account for the development of this system.

Conceptually, the present assembly is based on achieving an optimum conversion of the wind energy available in several regions, either in regions having high velocities of wind or in regions with moderated or low wind velocities. In the conventional machines an important amount of "residual" energy is not saved, therefore, according to the present invention, several "collecting" planes are provided for collecting the wind energy and transforming the same into electric energy, thus achieving a high saving of the available wind energy.

The wind power or energy is given in the expression:
P =½.m.V²
wherein m is the wind mass and V is the wind velocity.

In addition, since m = *ρ*.V.A, wherein ρ is the air density, (with ρ = 1.223 Kg/m³ at the sea level) and A is the incidence cross section, the above wind power expression is also:
P = ½.*ρ*.V.A.V², therefore
P =½.*ρ*.A.V³, therefore, the wind power per surface unit is:
P/A =½.*ρ*.V³.

It may be seen from the above expression that the wind velocity is quite relevant because the power is directly proportional to the cubic potential of the wind velocity, therefore, if the wind velocity is duplicated, for instance, the power is multiplied by 8. The integrated power in a time interval gives the energy collected in such time period.

It must be mentioned that in conventional installations, particularly at mean and high velocities, generally exceeding the 10 m/sec., most of the wind energy is not collected, this being a drawback that is overcome with the assembly of the present invention.

Assuming that four (4) rotor planes are provided according to a fishing mesh pattern, one behind the other according to the wind direction, the wind energy not collected by the first rotor is available to be collected by the second rotor, and so on, the energy not collected by the second rotor is collected by the third rotor or the following rotors. Since the energy collected by each plane, exceeding certain wind velocity, is almost constant for higher wind velocities and the energy that is not collected is significant, most of the energy that should be collected and converted by traditional one-rotor turbines, either large or small turbines, is lost. This may be seen in the P vs. V chart, that is Power vs. Velocity.

In several world regions, like in the southern part of Argentina and other regions with high velocity winds, the application of the present invention becomes important because, with a low total cost, the collection of the wind energy may be increased by increasing the number of collecting planes.

For example, in regions with wind velocities over 13-17 m/sec., the installation of 6-8 planes is convenient.

Four (4) planes formed by one Blade-rotor assembly will be now considered and, consequently, the curve Cp (Power Coefficient) that is a function of the velocity.

Due to the energy conservation theory and assuming a uniform mean velocity between each plane, we have:
V₁, inlet wind velocity impinging over the first plane or rotor,
V₂, wind velocity impinging on the second plane or rotor and given by the expression:
V₂ = V₁.(1-Cp(V₁))^{1/3}, wherein Cp(V₁) is the power coefficient for velocity V₁ which is a characteristic of the type of blade of the first rotor.
Cp(V₂) is obtained with V₂, that is the power coefficient characteristic to the type of blade of the second rotor for velocity V₂, and following this procedure it is obtained:
V₃ = V₂.(1-Cp(V₂))^{1/3}, then with V₃, Cp(V₃), that is the power coefficient, is obtained, and
V₄ = V₃.(1-Cp(V₂))^{1/3}, and Cp(V₄) is obtained in analogous way with V₄.
wherein:
V₃, wind velocity impinging over the third plane or rotor,
V₂, wind velocity impinging over the fourth plane or rotor

Now returning to the expression ρₒ = ½.*ρ*.V³, that is the wind power collected at the inlet of the first plane, the power collected by this plane will be:
P₁ = ½.*ρ* .V³.Cp(V₁)

In analogous manner, in the second plane:
P₂= ½.ρ.V³.(1-CP(V₁)).Cp(V₂)

In the third plane:
P₃ = ½.ρ.V³.(1-Cp(V₁)).(1-Cp(V₂)).Cp(V₃), and

in the fourth plane, the power will be:
P₄ = ½.ρ.V³.(1-Cp(V₁)).(1-Cp(V₂)).(1-Cp(V₃).Cp(V₄),
wherein:
½.*ρ*.V³. = Pₒ is the inlet power,
(1-Cp(V₁)) is the power fraction passing after the first plane towards the second plane,
(1-Cp(V₂)) is the power fraction passing after the second plane towards the third plane,
(1-Cp(V₃)) is the power fraction passing after the third plane towards the fourth plane, and
Cp(V₄) is the power collected in the fourth plane.

In analogous manner, several other planes may be analyzed.

The total power of the system will result from the sum of the powers collected at each rotor, namely:
P_{TOTAL} = P₁ + P₂ + P₃ +P₄

With the purpose of completing the concepts above explained, reference will be made to charts including characteristic curves or lines.

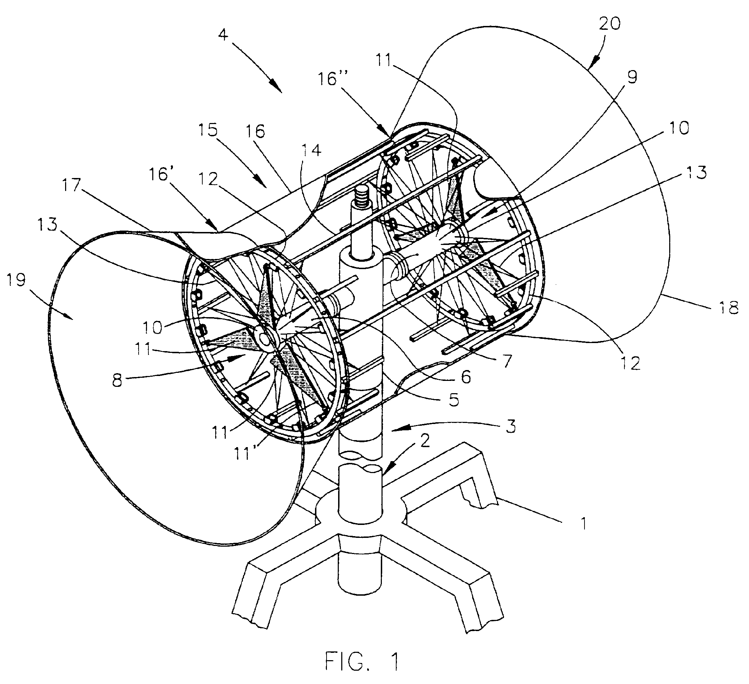

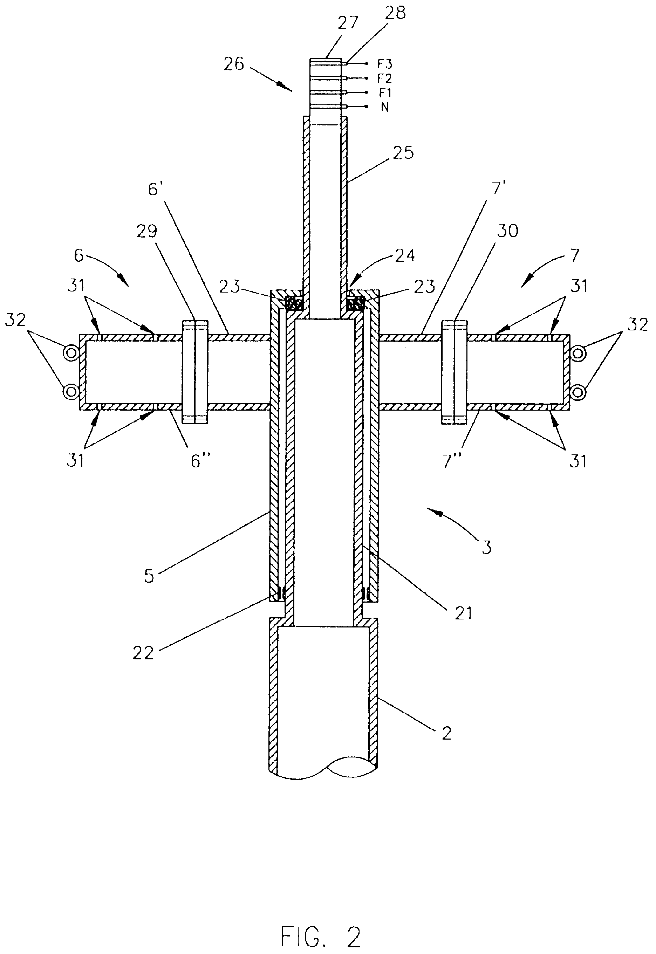

Now making reference to Fig. 1 a tower or support structure may be seen indicated by reference number 1 with a mast or post 2 mounted thereon, the post including an upper part or portion 3 that is coupled to the turbine or rotor assembly indicated by reference 4, which is characteristic of the present invention. As it will be seen in detail when referring to Fig. 2, said upper portion 3 of post 2 has an upper mounting cross component formed by a rotary vertical outer tubular body 5, and a pair of arms 6, 7 radially extending from body 5, the arms being diametrically opposite, the tubular body being axially and rotatably mounted on an upper inner end of the post, each arm having a first end fixed to outer tubular body 5 and a second end, opposite to the other one, said arms carrying respective rotors, coupled thereto and indicated by generic reference numbers 8 and 9.

Rotors 8, 9, as it will be further explained, are mounted, by means of a hub or disc having an hexagonal periphery, indicated by reference 10, to a freely rotating block which are coupled to arms 6, 7. Respective blades or vanes 11 are fixed to said hubs 10. Particularly, each rotor 8, 9 defining the main components of this arrangement includes three blades 1 which are parallel to each other and axially aligned as well as symmetrically arranged at opposite sides of a longitudinal axis of the post and spaced apart to each other by about a distance equivalent to a blade. In addition, rotors 8, 9 freely rotate in opposite directions, this being a condition on which the operation principle of the object of the present invention is based.

In effect, each rotor defines a wind collecting plane and, in that way, the wind energy that is not collected by the first rotor, rotor 8 for example, is collected by the second rotor, namely rotor 9, thus increasing the efficiency of the assembly. Because of the several collecting planes, two in this embodiment, the "impinging angle" is determined for the blades in each rotor, in a way to optimize this angle with the average wind velocity in the region. In this manner, the efficiency of the assembly is improved without resorting to costly and more complex mechanisms for regulating the blade pitch.

This concept may be generalized in a way that, with several wind collectors planes one behind the other according to the wind direction, a better conversion of the primary energy associated to the circulating air flow, that is the wind, is saved, thus improving the efficiency in high lands and regions with high speed winds. For high speed winds 4, 6, 8 or more pairs of planes, or rotors, may be arranged, always in pairs and rotating in opposite directions. In that way, the gyroscopic torque or momentum of a rotor is neutralized with the other rotor thus permitting an easy "orientation" of the collecting plane always looking for the position or orientation normal or perpendicular to the wind direction. The blades of one rotor have a pitch opposite to the pitch of the blades of the other rotor, whereby the rotors rotate in opposite directions under the wind action.

Close to rotor 8, like in the case of rotor 9, respective supporting rings 12 are fixed to arms 6, 7 by means of a set of spokes 13 in such a way that an inner side of the rings faces, or at least is very close to, distal ends 11' of blades 11. Rings 12 carry electric energy generating means which will be described below, which means are located in coincidence with a circumference defined by the circular path of distal ends 11 'of blades 11 during the rotary movement thereof, that is the rings are close or concentric to the periphery of the blade ends. Rings 12 of corresponding rotors 8, 9 are connected to each other by means of structural bars 14 uniformly spaced apart around the perimeter of such rings 12.

The above described assembly is housed in the interior of a tubular duct or case, indicated by general reference 15, comprising a central cylindrical portion 16 and opposite outwardly extending conical end portions 17 and 18, or mere cones, at ends 16', 16" of the cylindrical portion, the conical portions defining wind collecting, circulating, guiding and conveying mouth portions. Particularly, cone 17 defines an inlet mouth 19 for the collecting and entering of the wind and conical portion 18 defines an outlet mouth 20 for the exiting of the wind. Cone 17 allows to collect more quantity of wind because the cross section thereof is larger than the one of the cylindrical portion 16. Thus, the air is channeled from cone 17 towards the interior of cylindrical portion 16, passing through rotors 8 and 9, and freely exiting through cone 18 improving the inner and outer circulation of moving air mass.

While cones 17, 18 have been illustrated both radially outwardly extending from cylindrical portion 16, leading cone 17 may be installed as illustrated and rear cone 18 may be inverted in order to radially inwardly extend to progressively reduce its diameter rearward, whereby a leading rotor is arranged at a largest diameter of the leading cone portion and a rear rotor is arranged at a smallest diameter of the rear cone portion.

It is remarked that the channeling of the wind through an accelerating channel such as the case of "Venturi" type duct defined by cylindrical portion 16 and conical portions 17 and 18 permits the installation of grills or wire meshes in mouths 19, 20, particularly in regions having migratory birds, thus permitting the pass of wind and preventing these birds from entering the case and collide to the rotor blades, which installation is not possible in conventional turbines. In addition, such grills and meshes may be very useful for protecting the rotors in regions with intensive snowing and atmospheric and weather agents such as dust and ice. In this way, for example, the snow that eventually should deposit and adhere onto the blades may also be thawed by electrically generated heat that may be applied to the grill or mesh.

It is also remarked that with such wind channeling and acceleration, the wind mean velocity is increased and, hence, its kinetic energy at a cost of the decreasing of its pressure component. This has favorable influence in the net force resulting against each blade because these blades operate under the "wing effect" and not by the thrust effect. In other words, while the "lift" or "suction" component increases the "drag" component decreases.

As it is illustrated, rotors 8, 9 and respective peripheral rings 14 are located at ends 16 and 16 of cylindrical portion 16.

From the detailed cross-section of upper cross component 3 on post 2 illustrated in Fig. 2 it may be seen that the outer tubular body 5 is axially and freely rotatably mounted in an inner tubular portion or end 21, a bushing 22 being provided at the bottom of body 5 to support the radial forces and a conical bearing 23 being provided at an opposite end of body 5 to support the axial loads of the structure, whereby the body is rotatably mounted on an upper end of inner tubular end 21.

It may also be seen that the upper end of body 5 has an upper opening and an upper inner tubular portion 25 extending from tubular poition 21 of the post upwardly passes through the above said opening and ends in a cylindrical body or portion 26 with annular tracks 27 for conducting the generated electric energy to sliding electrical terminals 28, which are exemplary indicated with the letter N, indicating the neutral pole, and references F1, F2 and F3 indicating three phases of the generated electric current. Even when they are not shown, terminals 28 are connected to cables running within the post and connected to, for example, a board (not shown) from which the electric energy is taken for the corresponding use and/or processing. The cables are also connected to circuits for conditioning a generated electromotive force.

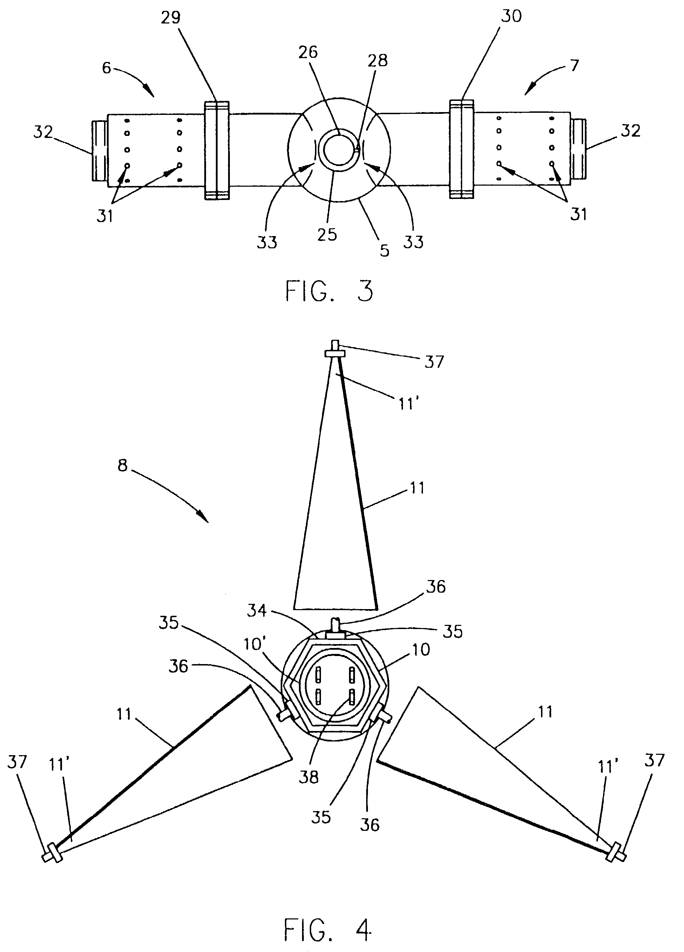

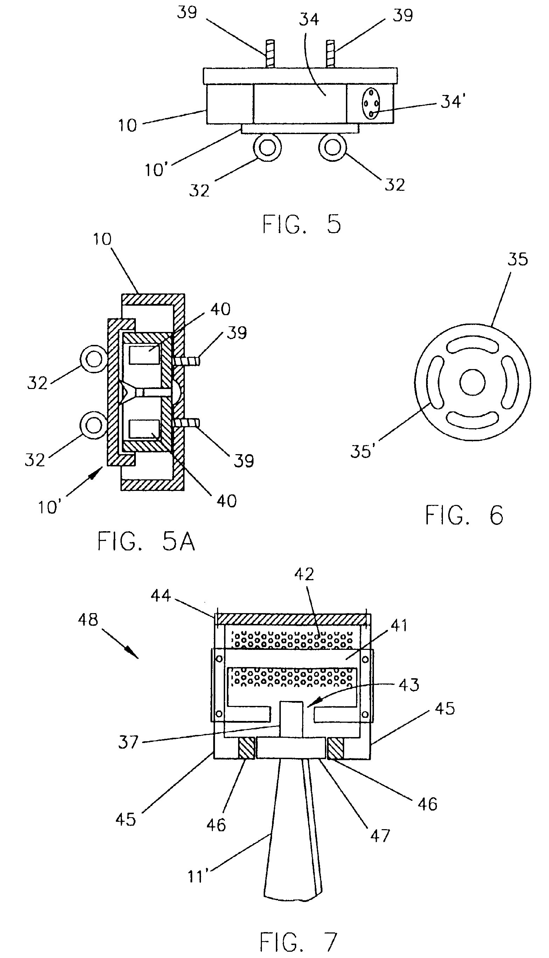

Figure 2 also shows radial arms 6 and 7 comprising respective lengths 6'and 7'projecting in second lengths 6" and 7" by means of respective connecting or coupling flanges 29 and 30. It may also be seen that lengths 6" and 7" including respective sets of orifices indicated by reference 31, into which orifices a first end of spokes 13 is inserted and fixed for the mounting of peripheral rings 12. A second end of the spokes is fixed to said support ring, whereby said support ring is coaxially mounted relative to said arms. With reference 32 is indicated, on each opposite end of arms 6 and 7, respective housings 32, and fastening pins of a hub or block 10'pass through said housings, as it is shown in Fig. 4, 5 and 5A, for mounting rotors 8 and 9.

Figure 3 complementary shows the illustration of Fig. 2, also showing arms 6 and 7 fixed by welding indicated by reference 33.

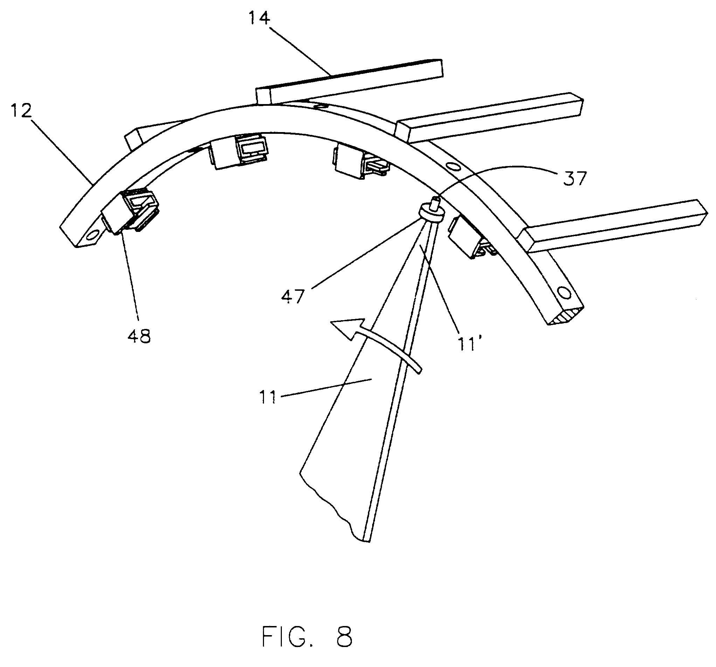

Fig. 4 shows hub or disc 10 coupled to block 10', hub 10 including an hexagonal periphery defining six sides 34, forming angles of 120° relative to each other, to which sides each shaft 36 extending inside and along the corresponding blades 11 are fixed through respective coupling plates 35. In the distal end 11' of each blade 11 respective permanent magnets 37 are mounted ad these magnets, as it will be described in relation to Figures 7, 8, form part of the electric energy generating means, the electric energy being obtained through the rotation of rotors 8, 9. It is indicated that said magnets are made of a Nd Fe B (neodymium-iron-boron) composite, whereby the highest values of magnetic energy are obtained, which values are in the range of 30-40 MGOe.

Reference 38 indicates ears for connecting to housings 32 arranged at the second ends of arms 6 and 7 for receiving pins for mounting rotors 8, 9 at the ends of said arms.

Fig. 5 clearly shows that one of sides or faces 34 of hexagonal disc 10 has orifices 34'for fixing coupling plate 35 shown in Fig. 6, which plate is provided with notches or profiled orifices 35'for regulating the angular position of the corresponding blade. Fig. 5 also shows a pair of screws 39 for fixing the hexagonal hub 10 to block 10'. The cross section illustrated in Fig. 5A diagramatically shows the inner structure of hub 10, coupled to block 10', including a brake drum with braking shoes 40 of the conventional type, the shoes actuating against the drum and being capable of actuating either manually or automatically to stop the rotation of rotors 8, 9 when this is appropriate, for example in the case of very high wind velocities or in the case of servicing or maintenance working.

Fig. 7 schematically shows the means used for generating electric energy, the means defined by magneto-electric transducers indicated by reference 48 comprising, as it may be seen, a ferromagnetic core 41 with an induction coil 42 wounded therein, said core having an air gap 43 through which gap magnet 37, arranged at each end 11' of blades 11, passes during the rotation of the corresponding rotor. Reference 44 indicates a coil-carrying support for connecting to ring 12, with a pair of support brackets 45 extending beyond air gap 43 and including guides or tracks 46 that, together with a slide 47 fixed to end 11' of blade 11, provide a guide for electromagnet 37 to guarantee that the magnet passes through the center of air gap 43.

The rotating magnetic field B passing for each air gap 43 induces a flux that, being variable, generates an electromotive force in the turns of coils 42 which force is directly proportional to the value of flux B and the tangential speed defined at the ends of the blades. The present arrangement permits to use the highest value of such tangential speed, in the maximum radius or "blade point", instead of the blade base or root like in the conventional turbines. Consequently, less magnetic mass is employed and costs are thus reduced.

Fig. 8 shows a plurality of transducers 48 arranged at the inner perimeter of ring 12, the transducers having the above disclosed features. One of blades 11 is also shown, particularly the position of its end 11' wherein the permanent magnet 37 is mounted, which magnet passes through air gap 43 during the rotation of rotor as it has been explained in relation to Fig. 7. In the described preferred embodiment 96 equally spaced transducers 48 are mounted in each ring 12, thus obtaining three electric current phases generated during the rotation of each rotor. This is to say that each of the phases is generated by 32 transducers 48. However, it is clear that, in practicing the invention, the total number of transducers 48 may be higher or lower according to the technical requirements in each particular application.

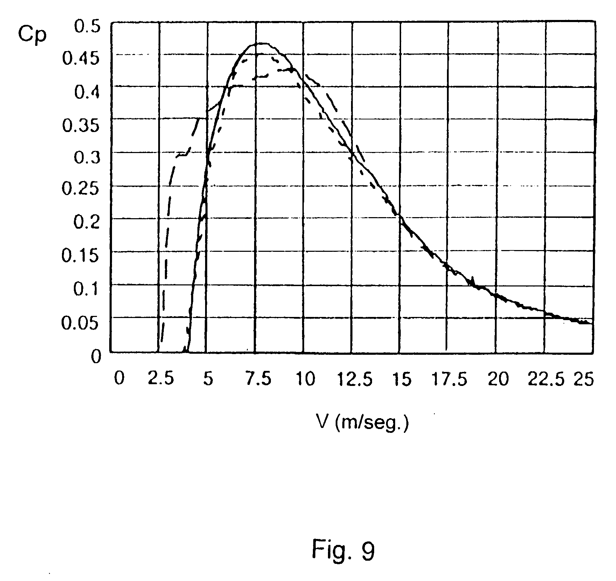

The graph of Fig. 9 shows three (3) characteristic curves or lines taken from known bibliography in the art, the curves showing the variations of the power coefficient Cp for conventional turbines, that is turbines having one rotor only. This graph shows a dash line curve, a solid line curve and third curve defined by a dotted line, each curve corresponding to a particular type of blade. Except for slight variations in the behavior of the tested blades, for wind velocities in the range of 7.5 m/sec. the highest power coefficient Cp is obtained, which Cp is about 0.45. Above this velocity value the power coefficient Cp begins to suddenly reduce up to velocities exceeding the value of about 17 m/sec. wherein the Cp reaches undoubtedly low values. This is to say that at moderated wind velocities an important output or performance of a wind turbine is obtained, however, with relatively high averaged wind velocities, the performance and efficiency of such turbines dramatically drops because of the available wind energy/ collected energy ratio.

The machine power remains approximately constant however the fraction of same relative to the wind power decreases as the wind velocity increases. Since the power naturally available "collected" per surface unit is approximately constant, about 400Watts per square meter, the output is increased by the installation of additional collecting planes.

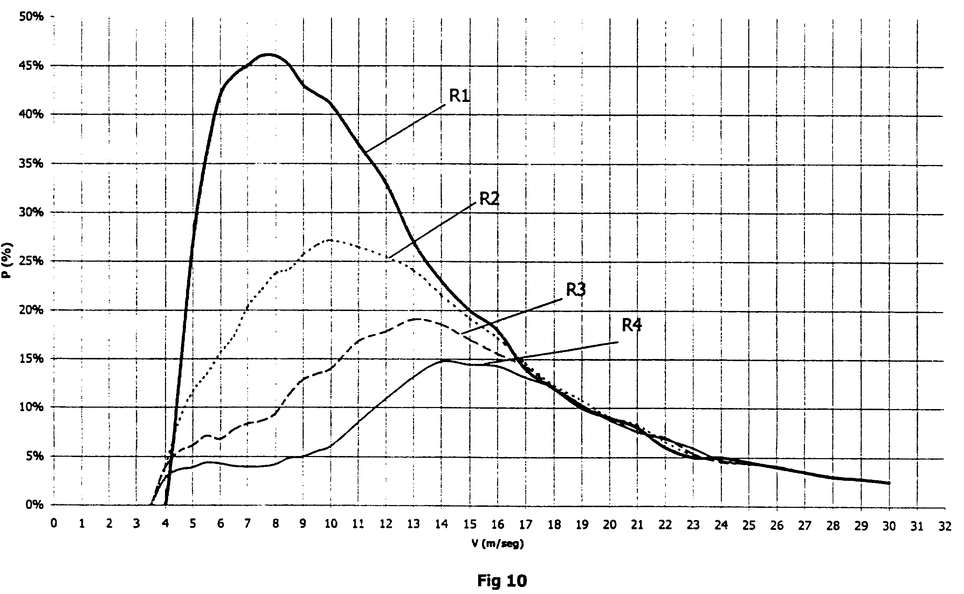

Graph in Fig. 10 shows the power percentage collected by four planes defined by rotors arranged one behind the other, aligned according to the principles of the present invention. It is made clear that while in the preferred embodiment two collecting planes, namely rotors 8 and 9, are disclosed, these curves are very useful to evidence the important benefits obtained on the basis of said assembly. In effect, it may be seen that the curve corresponding to the first collecting plane, indicated by reference R₁, is substantially coincident with the curves shown in Fig. 9, however, for a second collecting plane R₂ arranged behind the first plane the collected power percentage is dramatically reduced and, in like manner, this reduction may be seen for a third plane R₃ and a fourth plane R₄. It may be seen that the power percentage collected by plane R₁ reaches its maximum value at wind velocities of about 8 m/sec.; for plane R₂ the maximum collected percentage is obtained at wind velocities of 10 m/sec., and for planes R₃ and R₄ the maximum collected power percentages are reached at wind velocities of about 13 and 14 m/sec., respectively.

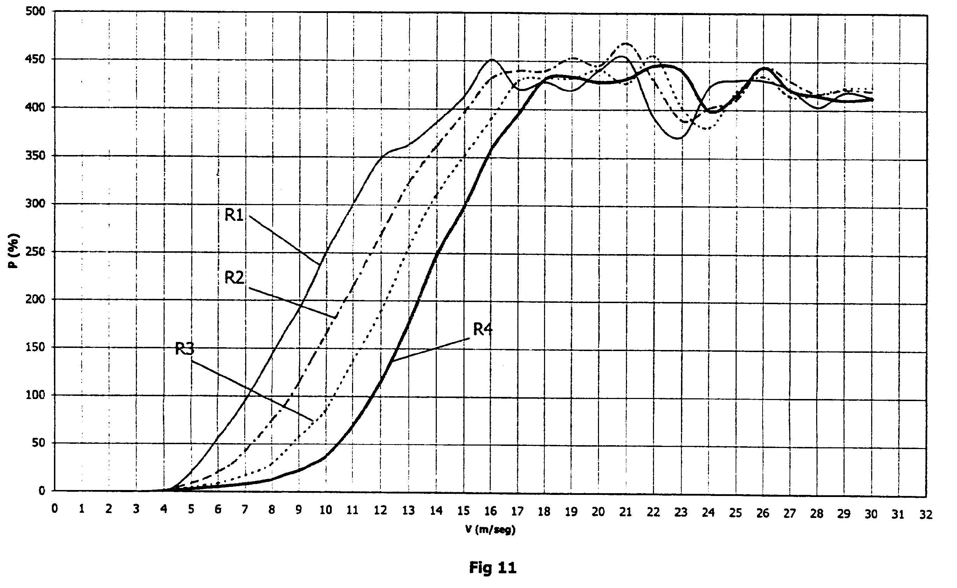

At velocities somewhat above 17 m/sec., each plane collects the highest possible energy. For exceeding velocities the system enters into a saturation region or practical limit, thus, while the power percentage progressively decreases, the power value remains constant and equivalent for each plane, this being shown in the graph of Fig. 11.

Thus, the highest benefits provided by the wind turbine assembly according to the invention are obtained at wind velocities above 17 m/sec.

In effect, for high wind velocities like the ones above mentioned, the power collected by planes R₂, R₃ and R₄ is added to the power collected by plane R₁, thus compensating the collecting looses at each individual plane (rotor) and resulting in a high general output in the generation of electric energy by the entire set of planes in the assembly.

The graph of Fig. 11 shows the generated power versus the wind velocity. As it can be seen for four planes R₁, R₂, R₃ and R₄, the generated power increases up to wind velocities of about 17 m/sec. and, above such value, except for slight variations in each plane, the power remains within more or less constant levels. Thus, at wind velocities above 17 m/sec. the powers generated by each plane are added (summed), thus obtaining, as it was already explained, a total power resulting from the sum of all the powers generated by each of the four wind collecting planes.

While the above description is considered enough to deeply understand either the theoretical fundaments, the meritorious structural features of the present invention, as well as the resulting benefits and advantages of the invention as compared to the prior art, it may be useful now to make reference to some alternative embodiments that permit to further increase the collected wind power. Thus, it must be clear that, without departing from what is disclosed and claimed, the present wind turbine assembly may be practiced as assemblies of generator units mounted on structures of several types and sizes.

In effect, on a same tower, duly adapted, several wind collecting and energy converting units may be arranged, whereby to form a kind of tandem or net of several said units. In this way, several power values in the range of hundreds of kilowatts, and even megawatts, can be obtained. This net-kind assembly actuates like a units arrangement that can be orientated to follow the changes of the wind direction. To this purpose, a servo-mechanism, controlled by an outer weathercock, may be incorporated to the assembly. Thus, with several units arranged in said net a power equivalent to large conventional machines is obtained, but differing from these machines, and with the present arrangement of rotors in series, and a better weight/swept area ratio, a considerable reduction in the final manufacture costs, installation and service starting of the assembly is obtained. Furthermore, as it was above explained, a beneficial convergence effect with better wind collection is additionally obtained by the provision of cones or funnel-type ends, with two, three or more planes rotating in pairs and in opposite directions.

Higher power may also be obtained by installing, at both sides of the tower, reticulated structures which are connected at one side thereof to the tower with the weight of the structures resting on floats floating in a water container for such purpose. This kind of installation can also be carried out in no-deep water masses close to the sea shore, by installing the tower or post, typically made of reinforced concrete, in lakes, basins or dammed up waters.

In these cases the assembly may be considered a great energy converting or transforming plant, with collected powers that, in regions with high wind velocities, can reach the 30-50 Mw.

While preferred embodiments of the present invention have been illustrated and described, it will be obvious to those skilled in the art that various changes and modifications may be made therein without departing from the scope of the invention as defined in the appended claims.

## Claims

1. An energy converter of the type comprising a support structure and a wind actuated rotor assembly mounted on the structure, the rotor assembly comprising:
at least two axially aligned and spaced apart rotors rotating in opposite directions.

2. The converter of claim 1, wherein each rotor comprises a plurality of blades and the blades of one rotor have a pitch opposite to the pitch of the blades of the other rotor, whereby the rotors rotate in opposite directions under the wind action.

3. The converter of claim 1, further comprising a vertical post, each rotor being mounted on a corresponding shaft, both shafts being arranged in a common axis perpendicular to the vertical post, both rotors being arranged symmetrically one at each side of the post.

4. The converter of claim 3, further comprising electricity generating means associated to said rotors.

5. The converter of claim 4, wherein the electricity generating means comprises magneto-electric transducers arranged in a circumference pattern and permanent magnets arranged at distal ends of the rotor blades.

6. The converter of claim 5, wherein the transducers are arranged in corresponding support rings arranged concentrically to the periphery of the blades, the transducers forming a gap and the distal ends of the blades carrying the magnets being arranged in a circumference path passing through said gap.

7. The converter of claim 6, wherein each transducer comprises an induction coil wounded on a ferromagnetic core defining said gap.

8. The converter of claim 1, further comprising an upper mounting cross component comprising a vertical outer tubular body and two diametrically opposite arms, the tubular body being axially and rotatably mounted on an upper inner end of the post, each arm radially extending out from the tubular body and having a first end fixed to said outer tubular body and a second end including a plurality of orifices and coupling means for mounting said rotors, a plurality of radial spokes being provided at each second end of the arms with each spoke having a first end fixed into one of said orifices and a second end fixed to said support ring, whereby said support ring is coaxially mounted to said arms.

9. The converter of claim 8, wherein the upper inner portion of the post upwardly extends through an upper opening of the outer tubular body, the upper inner portion of the post including a cylindrical portion with annular tracks connected to sliding electrical terminals which in turn are connected to the transducers through cables running within the post, the cables also connecting to circuits for conditioning a generated electromotive force.

10. The converter of claim 1, wherein the rotors are housed within a tubular case defining a wind conducting channel.

11. The converter of claim 10, wherein the tubular case comprises a central cylindrical portion defining a wind conducting channel and an axially outwardly extending conical portion connected at each end of the cylindrical portion, said conical portions defining wind-collecting and guiding portions.

12. The converter of claim 11, wherein each rotor is arranged at each respective end of the cylindrical portion of the case.

13. The converter of claim 11, wherein the tubular case is fixed to the support rings, the rings being connected to each other by structural bars extending along the cylindrical portion of the case.

14. The converter of claim 8, wherein the rotor includes a rotary hub mounted on the coupling means at the second end of each corresponding arm, the hub including an hexagonal periphery defining six sides each side including a coupling plate for connecting a blade of the rotor to the hub, each coupling plate including a plurality of profiled orifices for regulating the orientation angle of the associated blade.

15. The converter of claim 14, wherein the hub includes a brake drum and brake shoes for braking the rotor.

16. The converter of claim 7, wherein the permanent magnets are made of a NdFeB composite.

17. The converter of claim 1, wherein each rotor includes several energy generators defining several poles, each pole supplying a quasi-continuous induced tension signal.

18. The converter of claim 10, wherein the tubular case comprises a central cylindrical portion defining a wind conducting channel and a conical portion connected at each end of the cylindrical portion, said conical portions defining wind-collecting and guiding portions, a leading rotor being arranged at a largest diameter of a leading cone portion and a rear rotor being arranged at a smallest diameter of a rear cone portion.

19. A wind energy converter comprising:
a vertical post,
at least two wind actuated axial bladed rotors, the rotors being symmetrically arranged at both sides of the post and rotatably mounted around an horizontal axis perpendicular to the post to rotate in opposite directions,
electricity generating means comprising magneto-electric transducers arranged in a circumference pattern and permanent magnets arranged at distal ends of rotor blades, and
a tubular case housing the rotors and defining a wind channel for forcing and guiding the wind through the rotors.
